# EUROPEAN PATENT SPECIFICATION

(11) **EP 4 323 817 B1**
(45) Date of publication and mention of the grant of the patent: **18.11.2026**
(21) Application number: 22718297.9
(22) Date of filing: 30.03.2022
(51) Int. Cl.: G02B 5/20, G02B 5/22, G02B 5/30, G02C 7/10

(54) **ELECTROMAGNETIC WAVES MODULATING FILTER**
FILTER ZUR MODULATION ELEKTROMAGNETISCHER WELLEN
FILTRE DE MODULATION D'ONDES ÉLECTROMAGNÉTIQUES

(30) Priority: 14.04.2021 IT 202100009383
(43) Date of publication of application: 21.02.2024
(73) Proprietor: Pinelli, Roberto, 6962 Lugano (CH)
(72) Inventor: Pinelli, Roberto, 6962 Lugano (CH)
(74) Representative: Bird & Bird Società tra Avvocati S.r.l.
(86) International application number: PCT/IB2022/052950
(87) International publication number: WO 2022/219441

(56) References cited:
- EP-A1- 3 327 091
- EP-A1- 3 457 196
- WO-A1-2016/118193
- WO-A1-2017/077359
- AIZE KIJLSTRA ET AL: "Lutein: More than just a filter for blue light", PROGRESS IN RETINAL AND EYE RESEARCH, vol. 31, no. 4, 21 February 2012 (2012-02-21), pages 303 - 315, XP028509122, ISSN: 1350-9462, [retrieved on 20120321], DOI: 10.1016/J.PRETEYERES.2012.03.002

## Description

### Technical field of the invention

The present invention relates to an optical filter for modulating electromagnetic waves that make up a light radiation, that is a filter configured to allow the passage therethrough only of electromagnetic waves comprised within some predetermined wavelength ranges.

The application of the proposed technical solution in particular relates to the implementation of lenses for modulating natural light, the electromagnetic waves (or electromagnetic radiations) thereof are filtered with the purpose of performing treatments for improving the visual quality, and preventing or treating eyes' pathologies.

### Background

The solar light penetrating the human eye comprises wavelengths in the visible spectrum (range 380-760 nanometres), and in the invisible spectrum (ultraviolet light, UV, with wavelength lower than 380 nm and infrared light, IR, with wavelength higher than 760 nanometres).

As it is well known, the solar rays potentially dangerous for our skin and for our eyes are those with lower wavelength, and then higher frequency (UV). For this reason, over time several solutions to protect from the sun have developed, in the past by using 'primitive' instruments such as parasol, wood eyeglasses with slots, frosted coloured glasses, and nowadays by having recourse to the help of technology which allows to produce sunglasses specific for every occasion, solar creams, etc.

The devices shielding from solar light (solar lenses, visors, masks, transparent filters) are devised in the common use as a protection towards the solar rays harmful for the eyes (or, more generally, for the body). In this regard, even the sector regulations define the protection devices as adapted to safeguard one's own visual apparatus against risks for the eye health.

More in particular, the purpose of currently known visual shields and optical filters is to remove frequencies and reflexes.

On this regard, with reference to the sunglasses already existing on the market, it can be noted that they have filters to implement a protection against UV rays, nevertheless ignoring to consider the resulting transmission spectrum which really reaches the eye. A practical example can be that of very dark glasses, with grey sun lenses, which protects from the sun but does not improve the view as a whole, nor favours the visual process. On the contrary, the pupil, behind a dark lens which makes less clear the vision, usually dilates and enters a standby state. Therefore, the pursued aim currently, as it was in the past, is only to shield as much as possible natural light radiation.

WO 2017/077359 A1 relates to an optical article comprising an absorbing dye having an optimized absorption spectrum in the blue region of the light spectrum for efficiently blocking at least part of the phototoxic blue light.

### Summary of the invention

The technical problem placed and solved by the present invention is to provide a device for modulating light radiations which allows to obviate the drawbacks mentioned above with reference to the known art.

The above-mentioned drawbacks are solved by an optical filter according to the independent claim 1, as well as by an ophthalmic lens and by glasses comprising the same filter, defined in the dependent claims **7** and 8.

Preferred features of the present invention are set forth in the depending claims. The present invention is based upon the assumption that the solar light, or natural light, is source of life, since it allows the fundamental photosynthesis process in plants, also essential for other human beings populating the earth.

Moreover, natural light is important since it directly causes biological effects on the human body, by influencing the production of vitamins (synthesis of vitamin D), the adjustment of hormones (the body secretes serotonin if exposed to light and melatonin in the dark), as well as circadian rhythms and then the sleep-wake balance.

Still, it is by now peacefully recognized that the exposure to natural light is source of physical and psychophysical well-being. For example, the effects of phototherapy to fight depression and of photo-biomodulation of several body districts to fight inflammation and chronic pain are known.

Obviously, if one has no control on the duration of exposure and intensity of received electromagnetic radiation, the light emission can assume a negative connotation and then produce dangerous effects on human body.

The present invention takes inspiration from observing nature and establishing an analogy between photosynthesis and chemical reaction of retina photoreceptors inside the human eye, when they are struck by natural light.

The human eyes are provided with a powerful diaphragm (the pupil), which works and adjusts its opening depending upon the received light. Not only the human eye requires a light source in order to be able to perform its functions, but it is known that it reaches an adequate visual capability only if it is stimulated by the light since birth. Considering that the retina photoreceptors have the capability of absorbing different wavelengths, such as for example those corresponding to blue, green and red, the wider the light offer is, the more the visual system develops an optimum resolution of the visual image.

Based upon these considerations, a technical solution has been implemented configured to implement a photo-activation of the visual system through the modulation of the electromagnetic waves of the natural light radiation.

The proposed invention, then, is implemented by means of an optical filter which does not protect or block the light since it is harmful, rather it takes full advantage of the light offer, by selecting the most significant range of radiations to be transmitted to a user's eye, to emphasize to the maximum the beneficial effect on the visual system.

The proposed filter is configured for a long-lasting, preferably daily, use allowing the transmission of continuous 'light nourishment' to the eye, by giving a beneficial stimulation to the photoreceptors, active for the whole use duration. The 'nourishment' process, which exploits natural light, has no dangerous effects which may cause determined wavelengths (ultraviolets), which instead are shielded.

The purpose of the modulating filter then is to favour the cell stimulation through the exclusive transmission of predetermined wavelengths of the natural radiation, acting as photo-activators of the retinal receptors.

It was observed and scientifically demonstrated that the solar light, subjected to a modulation through the invention filter, guarantees a direct passage thereof to the retina photoreceptors with a specific range inside the visible spectrum, by giving 'nourishment' to the visual system. The reception protracted over time of the selected electromagnetic waves provides: cell nourishment, beneficial stimulation of the retinal photoreceptors and elevation of the visual capabilities, such as for example contrast sensitivity and visual acuity.

The vision is continuously stimulated, consequently the contrast sensitivity improves, the vision results to be clear, defined and three-dimensional, the eye works with continuity with the light, the condition of total rest and accommodative inhibition does not take place, the pupil adapts and returns a neuro-visual response.

The continuous stimulation, even if in small doses, sets in motion the whole visual process which involves pupil-crystalline-accommodation and allows the eye, very dynamic organ, to process the vision at best and to avoid 'oxidation'.

Advantageously, it was observed that a visual advantage is always present in association to the use of the filter according to the invention, independently from the starting visual condition of the analysed subject.

Additionally, the modulation of the light radiation performed by using the proposed filter allows to nourish the visual system and to improve the visual quality through a sort of 'retinal photosynthesis'.

Other advantages, features and use modes of the present invention will result evident from the following detailed description of some embodiments, shown by way of example and not for limitative purposes.

### Brief description of figures

The enclosed Figures will be referred to, wherein:
- Figure 1 shows a section of retina of human eye;
- Figure 2 represents a graph showing the course of sensitivity of retina photoreceptor cones to the electromagnetic waves;
- Figure 3 shows the whole electromagnetic spectrum;
- Figure 4 represents a graph showing the different course of sensitivity of human eye according to day and night vision;
- Figure 5 shows a schematic representation of the cell stimulation mechanism by the light;
- Figure 6 shows a schematic representation of a light polarization system;
- Figure 7 shows a partially exploded perspective view of a preferred embodiment of an optical filter according to the present invention;
- Figures 8 and 9 show a perspective view and a front view, respectively, of a preferred embodiment of glasses having ophthalmic lenses including an optical filter according to the present invention;
- Figure 10 shows, in table form, characteristic parameters of a preferred embodiment of glasses according to the present invention; and
- Figure 11 represents a graph showing the course of spectral transmittance of the preferred embodiment of glasses according to the present invention.

The above-mentioned Figures are to be meant by way of example only and not for limitative purposes.

### Description

### Scientific concepts underlying the present invention

The eye is the main sense organ of the human visual system, it has the task of receiving the light information of a determined object, adjusting its intensity through a diaphragm called pupil and focalizing it under the form of image on the retina, through a system of transparent dioptres, thereamong the crystalline, which actually implements a natural lens. The image is then transformed into electric signal, which through the optical nerve reaches the brain, where it is processes and interpreted.

The light crosses all transparent tissues of the eye and is impressed on the retina, a tissue covering internally the bottom of the eye. In particular, the images are focalized in the retina's central area called macula. The macula includes the fovea, highly specialized structure, responsible for the maximum visual acuity for far and near, of the perception and distinction of colours, of maximum contrast sensitivity.

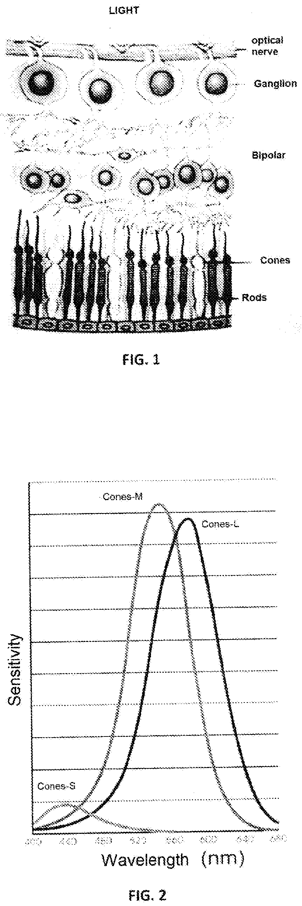

With reference to Figure 1, inside the retina there are different types of cells (photoreceptors, bipolar, horizontal, amacrine and ganglion cells). The photoreceptors are the first cells of retina which receive the visual pulse and they discharge it to the nervous cells.

The main photoreceptors are the cones, placed only in the retina's central portion only and assigned to receive the intense light stimuli (daily/photopic vision), and the rods, situated in the retina's periphery, specialized in receiving the low-intensity light stimuli (night/scotopic vision).

Each single cone discharges the received pulse to a nervous cell (ratio 1:1), thus the information carried by the cone is much more precise in its transmission. In fact, the cones determine the finest visual capabilities (colours, contrast, precision in viewing the detail). As far as the rods are concerned, each group of rods discharges the received pulse to a nervous cell (ratio x:1, where x>1 is the number of rods per nervous cell), thus the carried information is less precise, it is useful to move in the dark and roughly distinguish the objects.

The cones are provided with pigments sensitive to three different wavelengths which correspond to blue, green and red colours. These photoreceptors allow to see in colour.

The maximum sensitivity of the cones sensitive to blue is 440 nanometres, whereas it is 540 nm for those perceiving green and 570 nm for the cones sensitive to red. On the contrary, the rods allow only to perceive in black and white (grey scale). Figure 2 shows the graph of sensitivities of the photoreceptor cones to the electromagnetic wave.

In order that there is a correct operation of the trichromatic vision, that is the capability of the human eye to see the three primary colours and all combinations thereof, the three types of photoreceptors have to operate correctly. Each cone provides its contribution in terms of colour composition and this is the reason why the different tones can be distinguished. Therefore, the supply of blue light must never be eliminated completely (as it can be seen in the graph of Figure 2, the cones sensitive to blue are stimulated with stronger frequencies than the two central curves of green and red). For example, a filter blocking fully the blue light cannot be used for driving since the road signs, including the illuminated ones, could not be interpreted correctly.

### Electromagnetic spectrum

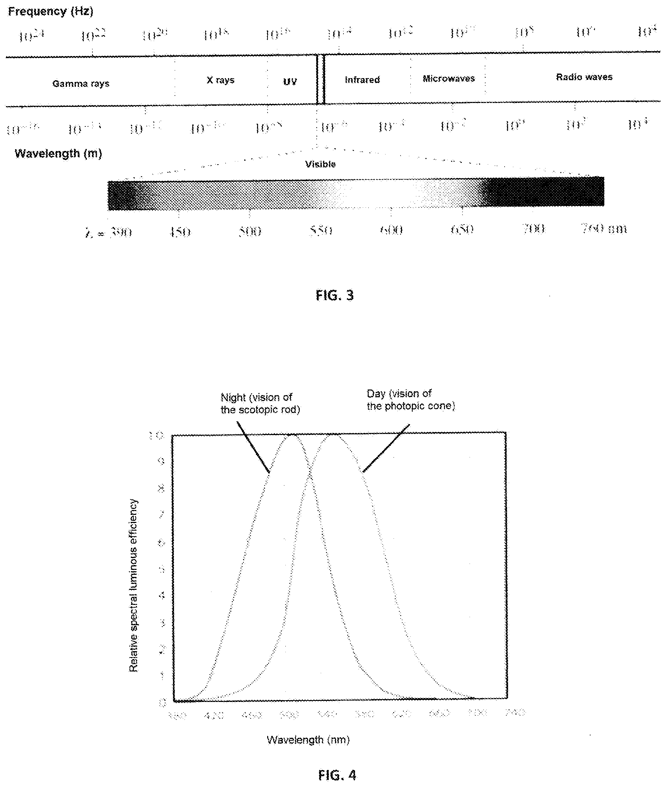

The set of electromagnetic radiations constitutes the electromagnetic spectrum. The radiations are electromagnetic waves characterized by a wavelength and a frequency. The energy transported by the electromagnetic radiation depends upon the wavelength. Since the wavelength, expressed in metres (m) or nanometres (nm), and the frequency, expressed in Hertz (Hz), are inversely proportional, the smaller the wavelength is, the greater the frequency, and then the transported energy, is (Figure 3).

The human visual system is capable of perceiving wavelengths comprised between 380 nm and 760 nm, thereto the name of visible light is given. Smaller wavelengths correspond to UV, X and gamma rays which have all higher frequency than visible light and then higher energy (harmful rays). The infrared radiations (IR), radio waves and micro-waves instead have higher wavelengths than visible light and lower energy content.

The human eye is sensitive to determined wavelengths and, as shown in Figure 4, sensitivity varies depending upon the photopic (day) or scotopic (night) vision. The eye has a sensitivity peak at about 555 nanometres, that is very sensitive to green, the prevailing colour in nature.

### Photobiomodulation

A confirmation that determined wavelengths provide benefits to human tissues and their cells is the light therapy, by now known for years and supported by several scientific studies. More in particular, one speaks about photo-modulation of the body tissues, therefore, based upon the specific purpose of the therapy, different wavelengths are used.

Photobiomodulation, also called PBM or LLLT, is a treatment using diodes emitting low-powered light/laser to emit light in the human body. This photonic therapy provides for emitting different frequencies to obtain different biological effects. The different wavelengths penetrate the cells and create a positive, even therapeutic, change in the body. For example, the effective wavelengths to treat inflammations are comprised between 630 nm and 670 nm (red light) and between 810 nm and 880 nm (IR).

PBM is used for the most disparate therapeutic applications, for example it improves the muscle recovery, it increases the blood flow, it improves the skin tone, it reduces inflammation, it repairs the soft tissues, it alleviates chronic pains, it reduces oxidative stress.

The present invention aims at using the photobiomodulation technique to improve the patient's visual performances.

Data collected by the inventor confirm that the stimulation by modulation of natural light produces an increase in the visual capabilities, such as visual acuity and contrast sensitivity, both in subjects with pathologies of the visual apparatus and in subjects with healthy eyes. The constant, and often not temporary, improvement occurred in 70% of the analysed cases.

The photobiomodulation procedure implemented by the inventor is based upon the reproduction of selected electromagnetic waves. Obviously, for an organ such as the eye, which includes transparent means which already filter the light, a sophisticated procedure was developed. The eye is very delicate and has a particular sensitivity with respect to some wavelengths, for this reason the therapy developed by the inventor articulates in four steps, which alternate different wavelengths, different exposure time and positioning of eyes. The target of the emitted light are retina photoreceptors. The wavelengths useful for stimulating the photoreceptors in particular are three: 850 nm, 660 nm and 590 nm.

The preferred indications for treating a patient by photobiomodulation are shown hereinafter.

The above-mentioned therapy is recommended for treating pathologies and eye damages, including cases of inflammation, atrophies or deposition of drusen. Moreover, it contributes to improve healing wounds after trauma or eye surgical operations, as well as to increase the visual acuity and contrast sensitivity in patients with degenerative diseases, such as dry senile macular degeneration.

The photobiomodulation treatment uses a light capable of addressing a calibrated amount of energy on the retina. The whole procedure generally requires about ten minutes, it does not provide any type of anaesthesia nor hospital stay: the discharge takes place immediately after treatment. The patient is seated in front of the apparatus wholly vigilant and he/she does not feel any pain.

The treatment mainly consists of four steps: a first and a third step with open eyes, each one lasting about 35 seconds, with eye exposure to the wavelengths (590 and 850 nanometres) of the yellow pulsed light and radiation in the near infrared (NIR); a second and fourth step with closed eyes, each one lasting about 90 seconds, with exposure to the wavelength of the red continuous light (660 nanometres). During the treatment and immediately after it, a feeling of glare and a light feeling of heat are perceived, which the patients report to be very pleasant.

Scientific studies confirm that the wavelength of 590 nm (visible, corresponding to yellow-orange) promotes the generation of nitric oxide and inhibits neovascularization; the wavelength of 660 nm (visible, corresponding to red) promotes the bonds O₂, it stimulates the metabolic activity (ATP) and inhibits inflammation and the cell death; the wavelength of 850 nm (infrared) guides the transfer of electrons, it stimulates the metabolic activity (ATP) and inhibits inflammation and the cell death.

The object of the invention is to reproduce the above-mentioned therapy of photonic stimulation of the eye through modulation of natural light.

### Photostimulation

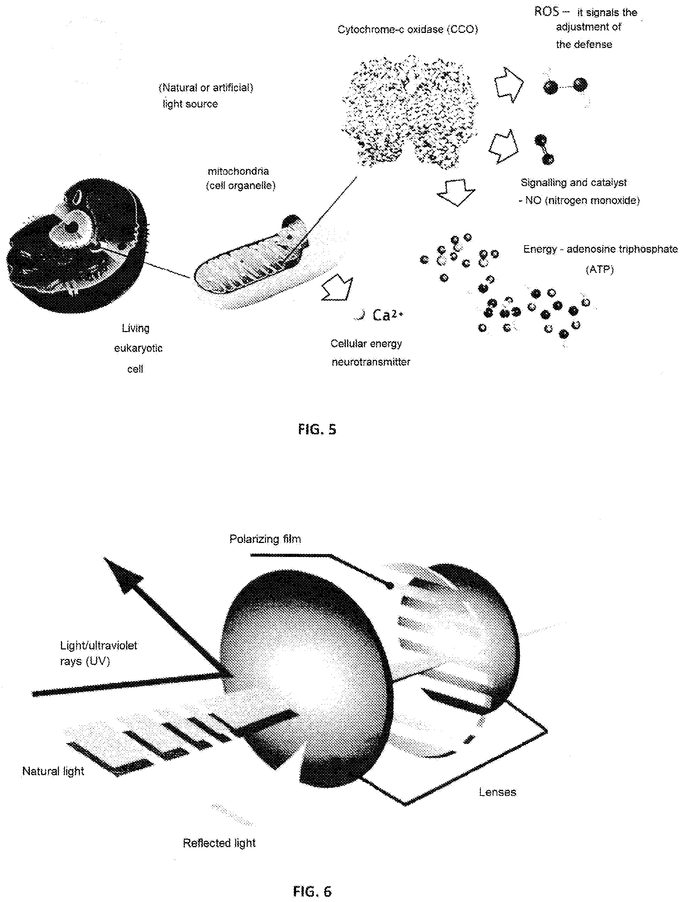

The mechanism of cell stimulation by the light was attributed to the activation by the light of the components of mitochondrial respiratory chain, with consequent stabilization of the metabolic function and start of a signalling cascade, which promotes the cell proliferation and cytoprotection (Figure 6).

The light stimulation takes place through the absorption of photons by the photoacceptors in the targeted tissue. Once absorbed, the secondary cell effects include increases in the energy production and changes in the signalling modes such as the reactive species of oxygen, the nitric oxide and the cellular calcium. The cell changes take place through the activation of transcription factors which lead to the modulation of the protein synthesis, to proliferation and to improvement of cell survival. In this process, the mitochondria play a fundamental role, since produce energy to sustain the normal cell function. Cytochrome C oxidase CCO, a fundamental protein involved in adjusting the mitochondrial activity, demonstrated to be a key photoacceptor of light in the spectral range of yellow and red, up to near infrared (NIR).

The oxidative stress and the reduced mitochondrial function can contribute to different eye disorders. The retina cells are among the most dependent on energy in the human body. The modulation of light with selected wavelengths can stimulate directly the production of mitochondrial energy and favour the cell repair.

### Polarization

Natural light moves in all directions of three-dimensional space, that is horizontally, vertically and along all angles comprised between these dimensions.

When the moving light meets a reflecting surface (such as for example asphalt, snow, water, sand or grass), it undergoes a process called polarization process, that is it starts to move vertically and horizontally.

The vertical light brings to the human eye a set of useful information, allowing to view colours and to perceive contrasts. On the contrary, the horizontal light (which is defined polarized light since it is ordered in parallel planes) simply creates a sort of annoyance, the so-called glare, which covers the whole visual field by causing reduction in visibility, distortion of colours, eye fatigue and irritation. Then, under conditions of strong luminosity, the glare is created, such as an annoying clear and blinding halo.

In order to avoid this phenomenon, in the field of the ophthalmic lenses, filters/transparent thin films were developed which polarize the light and consequently select the portion of electromagnetic wave useful to the eye.

In other words, a polarizing filter, thanks to its structure and density, does not allow the ultraviolet flow to reach the eye, as shown in Figure 6.

Thanks to their shape, the films/ polarized filters reduce considerably or remove the reflected light energy, main responsible for the reverb. With a polarized transparent surface, which modulates the light by directing it but at the same time by dampening the too much light information, a better contrast perception is obtained, the vision results to be clear even looking away, the colours appear more natural and saturated, the eyesight suffers less fatigue.

It is possible using a polarizing filtration combined both with transparent and coloured materials to obtain the same level (or an even better level) of reverb reduction. The used polarization usually is the linear one, since it is based upon the fact that the whole reflected light comes from horizontal surfaces, and usually all references which are in the field of view and which reflect according to a certain light angulation the sun light coming from top, are horizontal (asphalt, snow, water surface of a lake, of sea etc.).

There is even the possibility of polarizing the light circularly to highlight details which in the naked eye usually are not perceived (for example, the circular polarization is used in the eyepieces of microscopes). Technically, it is obtained by adding an additional polarizing filter to an already existing linear polarization to further reduce the light radiation from possible aberrations.

### The transmission of light and the legislation in force

The analysis of the materials to evaluate their capability of transmitting light is implemented by using a spectrophotometer. The spectrophotometer measures the transmission of the electromagnetic wave through a filter, which succeeds in being accurate independently from the material and from its density. This provides, at light transmission level, the DNA of that filter.

In the field of optics, the transmission factor can be represented by the following formula: ${τ}_{v} = \frac{{\int }_{380}^{780} D 65 \left(λ\right) {T}_{F} \left(λ\right) V \left(λ\right) dλ}{{\int }_{380}^{780} D 65 \left(λ\right) V \left(λ\right) dλ}$ wherein:
***τ_{V}*** is the light transmission value which determines the filter category in % and other lens features;
***T_{F}*** is the spectral transmittance value of the analysed filter for each wavelength. The legislations of the field establish this step every 5 nm, but it has to be considered that during scanning a spectrophotometer can be calibrated, to detect this piece of data, even every 0.5 nm, with a more accurate precision of the analysis against a higher scanning time period. This accurate scanning (not provided by the legislations) is useful in the field of colorimetry, by considering that the human eye succeeds in identifying a difference in "colour feeling" between wavelengths around 2 nm;
***D65*** is of the illuminant type thereto the filter refers (it is the visible field) and the legislation imposes to use the sun as source. CIE implemented a standard spectral emission of the sun which is designated with SD65 in the ISO 11664-2 standard;
***V(λ)*** designates the eye sensitivity to the several wavelengths in day vision. The current legislation relates to the photopic vision of the spectral distribution of the incandescent light, since the table with reference to the led light has not yet entered into force.

What is shown above relates to the European legislation for the classification of filters which are put before the eyes. The selection of a lens/filter having determined transmission features has to consider even the European legislation EN ISO 12312-1:2013, so as to be able to be used in different fields (for example, driving, recognition of the road or railway signs, recognition of light signals, traffic light signals, different colours in working field, such as colouring of the conductors of an electric panel). In the assumption of wanting to extend the implementation of the optical filter of the invention to other continents apart from the European one, even other two standardized legislations are to be considered: American Standard ANSI Z87.1-2003 and Australian New Zealand Standard AS/NZS 1067:2003 (they have slight differences with each other, usually relating the illuminant and the filter acceptability limits).

### The invention and preferred embodiments thereof

The present invention relates to a filter for the modulation of electromagnetic radiations, in particular those which make up natural light, configured to allow the transmission only of radiations which have a predetermined wavelength.

The invention provides a useful instrument for our visual apparatus since it does not implement the simple purpose to shield vision, but it 'nourishes' the user's eyes through the transmission of more similar wavelengths to the eye structures, such as retina and its photoreceptors, by producing a sort of "photosynthesis" of the cells assigned to capture and process the image.

In other words, the invention can be defined as a biomodulating filter of light radiation. The object of the specific filtration is to exploit the portion of electromagnetic wave useful to nourish eyes and body, which usually does not reach the eye selectively.

The material allowing modulation is considered an active material, not a material which shields light passively. Generally, the material thereof the filter is made has to re-emit a range of wavelengths comprised approximately between 490 and 590 nm in its central portion of the transmission graph, and preferably to transmit vertically and horizontally an amount of light in the order of 20-30%.

Preferably, the invention is implemented in the shape of an optical element or lens (for example assembled on an eyeglasses frame, a visor or other type of wearable support, or re-comprised in a windscreen, in a window, etc.) configured to let the light radiations to pass, or better transmit, selectively. In the course of the discussion, reference could be made to the invention simply as 'optical filter', 'bio-modulating filter', or still more simply 'filter'.

In other words, the optical filter of the invention is suitable to modify a light radiation (ex. natural light), so that a bio-modulated light radiation reaches the eye of a patient/user.

Different colouring tests were performed to be able to have as result a light emission which could convey to the eye a prevalence of wavelength corresponding to that suitable to the biomodulation, comprised preferably between 520 nm and 590 nm.

In particular, the treatment through photobiomodulation is performed thanks to the emission of selected wavelengths with a non-coherent light beam, that is which does not focalize with the power of a laser and then it is not invasive on body tissues. This allows to stimulate the photoreceptors particularly sensitive to some colours, by implementing a nourishing process of the visual apparatus which stimulates contrast sensitivity and visual capability in general. The modulating filter worn by the patient reproduces the same stimulation process through a continuous filtration of a determined range of the visible spectrum of natural light.

The object of the invention is to make usable the beneficial effect of visual photostimulation thanks to a "portable", indeed wearable, modulator, allowing to free the treatment from the hospital structures and from the presence of specialized operators.

Photomodulation through emission of artificial light enters the eye directly and must be channelled in small doses, in different moments and for very few minutes (for example 4 minutes of exposure for the wavelength 590. at most 1-3 times a week). On the contrary, the fact of exposing to the solar light is a natural process, it can be exploited at most and without time limitations if one is provided with a modulating filter according to the invention, which allows to separate the useful light rays from the not useful ones (rays which damage or overload our visual system with light information).

The object of the proposed modulating filter is to reproduce the same visual response while keeping a sufficiently defined and not altered vision of reality.

In particular, the optical filter of the invention allows the transmission of wavelengths in the range comprised between 490 and 660 nm, preferably 550 and 660 nm, with preferred under-ranges between 590 and 620 nm and above 660 nm.

In particular, the light transmission starts exceeding 1% from 490 nm on, and reaches 22% between 590 and 620 nanometres. It comes back to 21% between 620 and 669 nm, the transmission increasing slowly (NIR) beyond 660 nm. NIR and IR radiations in these doses are beneficial for the human body, therefore the optical filter is configured so that the wavelengths towards UV are shielded, whereas those towards NIR (not ionizing radiations) and IR (infrared light) are not shielded.

The inventor took inspiration from the amber colour of lutein existing on the photoreceptors of retina and obtainable as pigment from plant world (marigold, calendula). Lutein, which is a carotenoid and a pigment constituting retina, has enzymatic systems capable of absorbing the components of the light radiations harmful for the eye. The presence in the macula, central portion of retina, of this pigment allows to absorb and transform the electromagnetic waves, to neutralize the free radicals and then to avoid oxidation, but to promote cell stimulation.

Lutein belongs to the group of carotenoids called xanthophylls, which include oxygen atoms. The amber colour of these compounds is due to the specific molecular structure and ranges from pale yellow to orange, even up to bright red. For this reason, the fact of reproducing the same colouring results to be a dynamic system to protect and stimulate at the same time the sensitivity of the photoacceptors.

The filter to be put before the eyes according to the present invention, to modulate the radiation or solar wave, performs the same function of lutein.

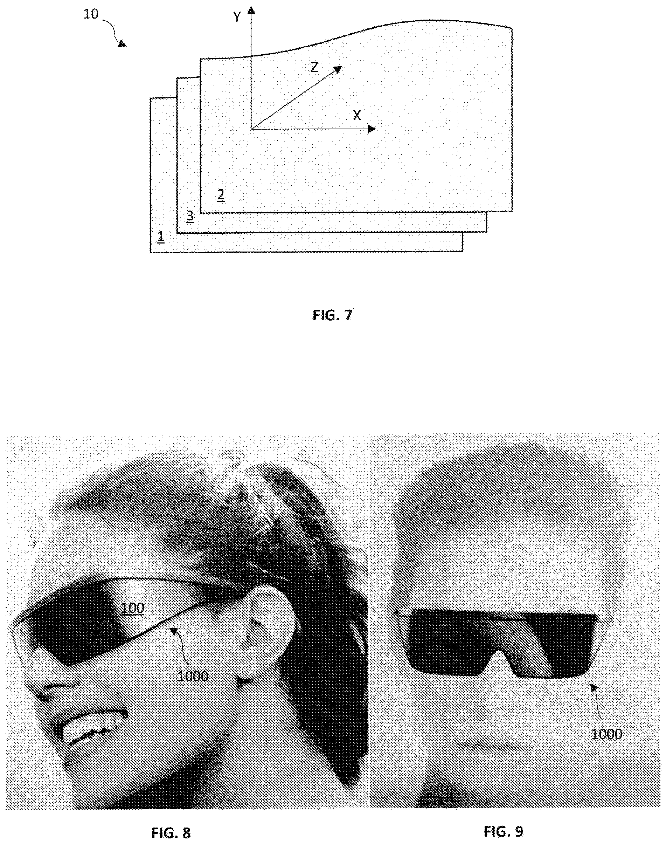

With reference to the preferred embodiment shown in Figure 7, an optical filter 10 according to the present invention comprises a first transparent support layer 1, preferably made of organic, in particular polymeric, material. Such first support layer comprises a, preferably vegetable, pigment or dye derived from lutein. Lutein (in powder or synthetic/acrylic) is a carotenoid pigment, capable of absorbing the light wavelengths up to 445 nm.

Within the present invention, under pigment derived from lutein in particular a natural pigment in powder coming from lutein (E161b), more in particular having formula C₄0H₅₆O₂, is meant, acting as dye of the modulating filter. The filter colouring is important since it determines the transmittance orientation. This modulator, to obtain the shown transmission spectrum, relies on pigmentation, polarization and the material.

The modulating filter, if pigmented by a carotenoid, simulates the physiological function thereof of absorbing determined wavelengths not to damage the vision and of transmitting others thereof to nourish the photoreceptors.

The colouring of the modulating filter by means of the above-mentioned pigment can take place in different alternating modes:
- by dipping the filter itself in a colour bath, after colouring the pigment intensity equal to about 25%-50% (preferably, the lutein composition is 95% acrylic);
- by colouring in paste, that is by inserting the pigment during injection in the mould of the organic material, that is by inserting the pigment in the melting step of the glass mixture, so as to insert in the lens a substantial modification of the chromatic features and of filter to the light radiation (preferably, the lutein composition is 9.5% vegetable powder);
- by colouring the film or lacquer only which in case covers the filter (preferably, the lutein composition is 95% acrylic).

As far as the preferred productive process of a modulating filter shaped like a glass lens is concerned, one starts removing the superfluous portions of the raw glass through a smoothing process, then moving on polishing the lens, with the purpose of making it shiny and bright. Subsequently, the washing and testing steps are implemented. Then a shaping action models the lens for the insertion in the frame. At last, the lens is subjected to a high temperature chemical process to provide adequate resistance thereof: during such process one can proceed with inserting directly the pigment inside the lens.

With reference to the preferred productive process of a modulating filter shaped like a lens made of plastic (in particular polymeric) material comprising the pigment derived from lutein, first of all the plastic material in granules is mixed to the lutein pigment, melt and injected in moulds where it transforms in finished lens. With lacquering, an anti-scratch and anti-abrasive film is applied or sprayed homogeneously on the lens.

The dye can be a pigment in natural/vegetable powder, synthetic/acrylic or a combination of both of them, including lutein - in particular, with formula C₄0H₅₆O₂ and meeting the transmission graph. Preferably, the colouring mixture has to be homogeneous, clean, without hazes, to have a good repeatability of the colour tone and a low metameric index.

Preferably, the pigment has a completely vegetable composition. According to additional preferred embodiments, the pigment composition can be 0.1%-10% vegetable and 99.9%-90% acrylic.

Should the material thereof the first support layer 1 is made not allow the colouring thereof, the latter can be lacquered by a colourable material with the above-mentioned pigment derived from lutein, or it can be coated by a pellicle or film coloured with the same pigment.

The colouring of the vegetable pigment derived from lutein determines the spectrum of emission of the natural light crossing the filter.

Three preferred embodiments of the invention not covered by the present claims are described hereinafter:
a) an optical filter (in particular the first support layer of the optical filter has to be meant) which comprises from 2 to 15% of lutein (in particular, as vegetable pigment), which allows to modulate 95% of wavelengths comprised between 420 nm and 560nm;
b) an optical filter (first support layer) which comprises the optimum value of 22% of lutein, which allows to shield up to 80% of wavelengths comprised between 590 nm and 620nm;
c) an optical filter (first support layer) which comprises 19% of lutein and shields up to 80% of wavelengths comprised between 620nm and 669nm.

All above-mentioned variants a), b) and c) allow to obtain, in use, the retina photobiomodulation, that is the use of enzyme cytochrome C oxidase (CCO), which represents the first target of photoacceptation for photobiomodulation. Such enzyme can be found in mitochondria, intracellular organelles even present in the photoreceptors.

More in detail:
- for variant a) an inhibition of neovascularization and a stimulus of the generation of nitric acid is proved. The modulated wavelength is very wide and involves an inhibition of neovascularization, therefore during the fluorescein angiographic examination and OCT lesser hyperfluorescence can be noted: this can be suitable in case of patients suffering from myopic or exudative maculopathy. After using lenses including the optical filter according to such configuration, the patient could note a slight improvement in metamorphopsias, vision of corrugated horizontal or vertical lines;
- with variant b) in particular the ATP activity is stimulated and it inhibits inflammation and death of photoreceptors. The involved wavelengths are intermediate and favour to keep the retinal surface, by inhibiting the death of the photoreceptors and keeping OCT, in particular in patients suffering from dry AMD, unchanged over time or with improvements of atrophies of retinal pigment epithelium, external layer of retina, and retinal drusen. The patient could note a slight improvement in brightness of vision, in colour perception and in central blurring;
- with variant b) in particular ATP activity is maintained high - stimulated as in variant b) - and it further inhibits inflammation and loss of photoreceptors. Such variant involves higher wavelengths and it is recommended to patients with initial dry AMD, then with presence of small irregularities, such as drusen, which can dissolve and lead to a retinal levelling. The patient has no particular visual disturbances, such as for example metamorphopsias, but he/she can notice a slight central blurring which can disturb his/her vision.

The filter according to the invention, as defined in particular in above-described variants a), b) and c) not only acts as shielding UV radiations but it allows to obtain the effect of retina photobiomodulation, by stimulating the retina cell activity and favouring both cell renewal (apoptosis) with a positive effect on the germinative layer of retinal stem cells, and a healthy metabolism thereof.

Still with reference to preferred variants of the invention, which can be combined to the already described ones as well as to the following ones, the first layer 1 can be configured in such a way as to allow a maximum transmittance in the blue equal to 2%, preferably comprised between 1% and 1.9%. Preferably, the first layer has a Qblue value higher than or equal to 0.6.

The Qblue value is the blue amount existing in the transmission graph when the Conformity Report according to the International Standard ISO 12312-1:2013/Amd.1:2015 is drawn up. With reference to the *visible spectral range,* there are minimum amounts of % of colour (*red, yellow, green, blue*) to be met, so that the filter for example complies with driving or with recognizing signals. The preferred option is to keep the blue amount very low, equal or higher than the minimum required value (0.6), in order to be able to use the filter in day hours without limitations.

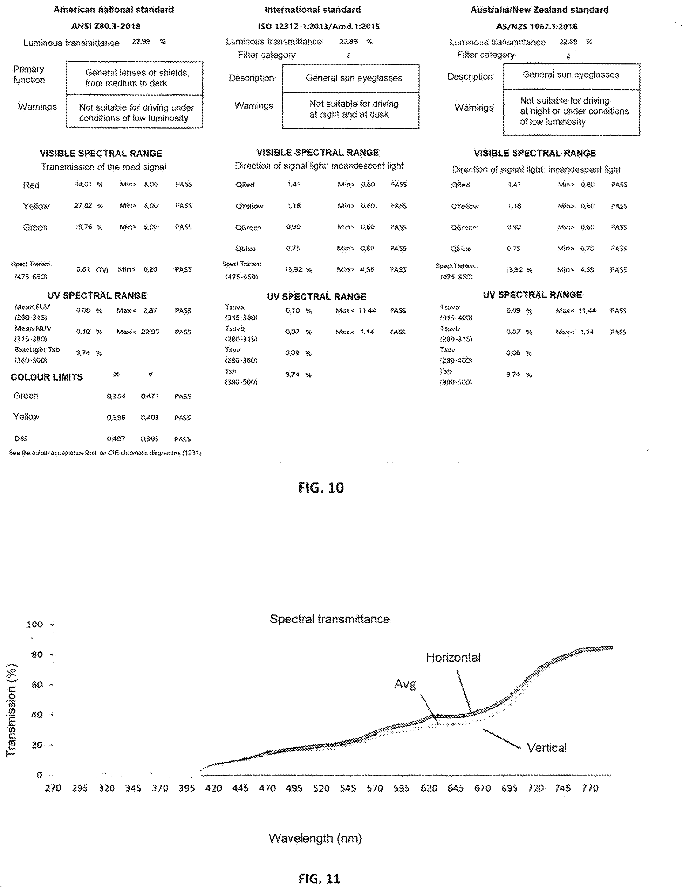

In case of the filter according to the present invention, see the report on transmission spectrum (Figure 11), the *luminous transmittance* is equal to 22.89%, whereas the *spectral transmittance* is equal to 13.92%

The *luminous transmittance* is a function of weighted spectral transmittance: ${τ}_{V} = \frac{{\int }_{380}^{780} τ \left(λ\right) V \left(λ\right) {S}_{c} \left(λ\right) dλ}{{\int }_{380}^{780} V \left(λ\right) {S}_{c} \left(λ\right) d \left(λ\right)}$ whereas the spectral transmittance is the lens transmission at a determined wavelength, practically it is only the value *τ*(*λ*) of the above shown formula (since it is an integral, the transmission *τ*(*λ*) is recorded every 5 nm from 380 to 780 nm).

*τ*(*λ*) is the value of the spectral transmittance of the lens, *V*(*λ*) is the spectral ordinate of the distribution of photopic luminous efficiency [*y*(*λ*)] of CIE (1931) standard colorimetric observer and *S_{c}*(*λ*) is the spectral intensity of the Standard illuminant C.

The factors Qred, Qyellow and Qgreen, better defined as Qsignals, are requirements for recognizing road signals - in particular, for transmitting the signal through a lens the Qsignal has to be higher than 8% for red and 6% for yellow and green. More in particular, such percentage values relate to "higher than 8% (or 6%) calculated upon the Luminous Trasmittance".

These parameters are very important since they are not only referred as signals for "driving", but the recognition of the colour luminous stimulus is also applied in many other activities where colour is important (ex. electrician who has to distinguish the colours of cables).

Moreover, the filter 10 comprises a second polarizing layer 2, preferably in form of a pellicle or a film, configured to implement a circular or linear polarization.

The polarization effect performed by the filter 10 has the purpose of adding sharpness and emphasizing the nourishment brought by the predetermined transmissible wavelengths.

The second layer 2 preferably is applied above (that is on a surface which, in use, is facing according to a direction of entrance of light radiation through the filter, that is opposite with respect to the user's eyes), or it is incorporated inside the first support layer 1.

The application of the second layer 2 can take place by means of the interposition between the latter and first layer 1 of an additional layer 3 of transparent glue.

The transparent glue joining the above-mentioned layers can have the same refraction index of the support layer 1.

The configuration of the filter 10 is so as to allow the exclusive transmission, therethrough, of electromagnetic waves of a light radiation which have a wavelength preferably comprised between 490 nm and 660 nm, more preferably between 550 nm and 660 nm. According to preferred embodiments, the optical filter 10 allows the transmission di wavelengths in the range comprised between 590 nm and 620 nm, and/or higher than 660 nm. Preferably, the configuration of the filter 10 is so as to allow the exclusive transmission, therethrough, of electromagnetic waves of a light radiation which have a wavelength comprised between 520 nm and 590 nm.

Preferably, the configuration of the optical filter 10 is substantially bidimensional or like a plate, that is the first and the second layer 1, 2 have a very reduced dimension in sagittal direction Z (thickness) with respect to the two longitudinal X and transversal Y main development dimensions.

According to claim 1 of the present invention, the first support layer 1 has a thickness comprised between 0.5 mm and 2 mm, whereas the second polarizing layer 2 has a thickness comprised between 0.1 mm and 0.6 mm.

The optical filter 10 can be subjected externally to additional treatments, or be covered by additional coating films, having the purpose of improving the quality of the light transmission, the duration of the material, the resistance to wear and external agents (ex. anti-scratch, anti-fouling, etc). The filter can be neutral or correct visual defects (ex. addition of dioptric power).

The filter according to the present invention preferably is unbreakable, light, hypoallergic, not subjected to wear, impact resistant, flexible but not deformable. According to claim 1 of the present invention, the first support layer 1 comprises, or consists of, polycarbonate. The polycarbonate is a thermoplastic material obtained from carbonic acid and it has a quite high refraction index (1.59), a low specific weight and a high impact resistance, but a low Abbe number (32), which involves a higher dispersion than materials such as cr39.

According to claim 1 of the present invention, the first layer 1 comprises, or consist of, nylon (C₁₂H₂₂N₂O₂), polyallyldiglycol-carbonate (PADC) or polyurethane (hereinafter, designated asTrivex for sake of simplicity).

Polyallyldiglycol-carbonate (PADC) or CR39 is a plastic polymer belonging to the class of polyesters. It has a refraction index 1.5 and a low chromatic dispersion (Abbe number 58).

Trivex is a polymer belonging to the class of urethanes. With respect to polycarbonate, Trivex has a similar mechanical resistance and greater lightness (that is a lower density, equal to 1.11 g/cm³). Other features thereof are a refraction index equal to 1.53 (similar to that of CR39), Abbe number equal to 46 (sufficiently high as not to cause chromatic aberration problems).

Still, the material of the first support layer 1 can be one selected between glass and tempered glass, which have a high transparency, even if they result to be less versatile in manufacturing devices which provide unbreakability (ex.: visors, eyeglasses without frame, ski goggles, helmets, windscreens, glasses for windows/verandas etc.).

According to the present invention, an optical filter having the above-mentioned technical features can consist, or be re-comprised in, an ophthalmic lens for eyeglasses or sun glasses.

Of course, the use of the filter according to the present invention can be provided even to implement visors or other accessories or devices, even for medical use, suitable to be worn by a user.

Hereinafter, with reference to Figures 8 and 9 a preferred embodiment of eyeglasses 1000 is described, comprising lenses 100 consisting of a filter element 10 according to the present invention.

The inventor's objective was to implement transparent eyeglasses 1000 to be able to place in front of the eyes of a patient/user, having well precise material and colour features. The separation of the materials is not preferred, then the frame and the lenses can be implemented as a whole, that is a monobloc surrounding the eyes and preferably it can be hooked behind the head in order not to weigh on ears.

Preferably, the monobloc wholly consists of the same biomodulating material (filter according to what already descried), so as to allow the light to modulate not only eyes, but the whole head. The eyeglasses' shape is preferably aerodynamic, thin in section, elongated and has a wide field of view not deformed by the structure's curvature; in can further be *"vented"* (with fissures) to favour anti-blurring.

The support on the nose is preferably invisible, with gaskets made of silicone with anti-swept and anti-slip function. On the external and internal surfaces of the biomodulating material, the application of treatments is preferred, such as anti-reflective, anti-fog and anti-fouling treatment.

According to a preferred embodiment of the eyeglasses 1000, the latter comprises two optically transparent lenses, consisting of several layers configured to implement the biomodulation of natural light according to what already described, and inserted in a frame made of organic material.

The material thereof the support layer of the lenses of the prototype 1000 is made is polycarbonate. The type of material used to implement the eyeglasses 1000 results to be very important for several reasons. The material of the optical filter must always meet the optical transparency even when coloured (no haze), and has to be resistant to impacts and scratches since one looks therethrough; moreover, the features must be carefully evaluated which determine the optical quality thereof: the refraction index and Abbe number.

The refraction index n designates the ratio between the speed of light c in the air and its speed v in transparent means (n is equal to c/v). Its capability of diverging the light rays depends upon the value n of transparent means. Abbe number designates the dispersion of transparent means, that is the capability of a filter to separate the polychromatic light in its red and blue extremes. The more this value increases, the more the lens limits the chromatic aberrations, then the eye avoids noting iridescences around the objects.

The above-mentioned two optical parameters are inversely proportional. If one selects a very dense material, with high n, Abbe number will be low, or a worse optical quality will be obtained - and vice versa.

In particular, for the implementation of the eyeglasses 1000 two dioptres made of polycarbonate with base curvature 6 and with a thickness of about 0.9-1 mm were processed; on the external surface of the dioptres, through a transparent glue, a polarizing film was applied (by using the linear polarization) with a thickness of approximatively 0.4 mm, which was lacquered subsequently with a hardening material to seal the external surface thereof and make it resistant to scratches.

These dioptres were coloured in paste during the injection of the mould with a synthetic/vegetable pigment (99% synthetic composition and 1% vegetable composition) in a colour selected based upon the wished wavelength as a resultant.

The dioptre was then ground and shaped to be able to be inserted in a frame made of nylon.

The DNA of the resulting spectrum associated to the particular above-described embodiment of the eyeglasses 1000, corresponding to the electromagnetic wave transmitted to the user's eyes through the lenses 100, is shown hereinafter.

| | | | | | |
|---|---|---|---|---|---|
| Number of pixels of the spectrometer: 520 | | 301 | 0.00258963165705363 | 337 | 0.00419702578379976 |
| | | 302 | 0.00233206922835931 | 338 | 0.00420097389048901 |
| Maximum intensity of the spectrometer: 0 | | 303 | 0.00286317567035543 | 339 | 0.00458044763000856 |
| | | 304 | 0.00355730102009276 | 340 | 0.00492032826367674 |
| Values of the spectrometer: | | 305 | 0.00284156439929119 | 341 | 0.00471285114020981 |
| 270 | 0.00330202934991449 | 306 | 0.00205386779113813 | 342 | 0.00432911947004965 |
| 271 | 0.00357636269873306 | 307 | 0.00217605018317063 | 343 | 0.00479193315063885 |
| 272 | 0.00307182065978592 | 308 | 0.00239037503909262 | 344 | 0.00514096312204971 |
| 273 | 0.0026301962160398 | 309 | 0.00228917321138956 | 345 | 0.00470667074806926 |
| 274 | 0.00304645738275566 | 310 | 0.00257337697696198 | 346 | 0.00401737733924901 |
| 275 | 0.00308285366773934 | 311 | 0.00227008253247497 | 347 | 0.00323191614274595 |
| 276 | 0.00276692153849026 | 312 | 0.0026571862780395 | 348 | 0.00262135638671194 |
| 277 | 0.00257683208274568 | 313 | 0.00276313832850116 | 349 | 0.00364425494459228 |
| 278 | 0.00297201002168348 | 314 | 0.00309178607102774 | 350 | 0.0044876485578658 |
| 279 | 0.00272113084532141 | 315 | 0.00316348080921862 | 351 | 0.0048405329272217 |
| 280 | 0.00269817776134889 | 316 | 0.00335834678423082 | 352 | 0.00462040045448807 |
| 281 | 0.00267275861142365 | 317 | 0.00395736478981803 | 353 | 0.00453898676791872 |
| 282 | 0.00306412521537312 | 318 | 0.00399366131212973 | 354 | 0.0046669513574533 |
| 283 | 0.00274813628644562 | 319 | 0.00307056727535598 | 355 | 0.00391701261182448 |
| 284 | 0.00267895644744562 | 320 | 0.00326622553437076 | 356 | 0.00322688995302795 |
| 285 | 0.00308019419285825 | 321 | 0.00391274708350609 | 357 | 0.00328097957371286 |
| 286 | 0.00301393181702522 | 322 | 0.00329073000642141 | 358 | 0.00418488952844018 |
| 287 | 0.00257912504422712 | 323 | 0.00327989799537763 | 359 | 0.00524235765885432 |
| 288 | 0.00236072658965319 | 324 | 0.00312013606499989 | 360 | 0.00438679952436294 |
| 289 | 0.00221538231143481 | 325 | 0.00278491916527207 | 361 | 0.00468831548791864 |
| 290 | 0.00259894894993684 | 326 | 0.00332126984015043 | 362 | 0.00568505372649805 |
| 291 | 0.00243531255447894 | 327 | 0.00338357132210501 | 363 | 0.00509658117823452 |
| 292 | 0.00259249993864419 | 328 | 0.00313658413728599 | 364 | 0.00455751461894078 |
| 293 | 0.00269077373766351 | 329 | 0.0036561748655623 | 365 | 0.00454949885687233 |
| 294 | 0.00243437844811713 | 330 | 0.00390849953441628 | 366 | 0.00407093066136674 |
| 295 | 0.00206011803223609 | 331 | 0.00488521069939027 | 367 | 0.00422459441891668 |
| 296 | 0.00267045802621486 | 332 | 0.00427067094410479 | 368 | 0.00531438689008719 |
| 297 | 0.00231732158310368 | 333 | 0.00360620329189443 | 369 | 0.00583292069502263 |
| 298 | 0.00256450070189514 | 334 | 0.00363184611491959 | 370 | 0.00574316543359971 |
| 299 | 0.00243020158226598 | 335 | 0.00400938106818374 | 371 | 0.00515494399945399 |
| 300 | 0.00248702028755678 | 336 | 0.00422596494051948 | 372 | 0.00481130253578734 |
| 373 | 0.00503133701054592 | 409 | 0.0280448239547063 | 445 | 0.043957017582131 |
| 374 | 0.0047812113888425 | 410 | 0.0274714426298385 | 446 | 0.0466590432827464 |
| 375 | 0.00479744181789353 | 411 | 0.029467631701473 | 447 | 0.0479764103544498 |
| 376 | 0.0048240261262981 | 412 | 0.0307315312483269 | 448 | 0.0495102741071601 |
| 377 | 0.00451015820409913 | 413 | 0.0305778172704308 | 449 | 0.051425147699862 |
| 378 | 0.00428487631134798 | 414 | 0.0300650561610116 | 450 | 0.0517169563713448 |
| 379 | 0.00499445187828456 | 415 | 0.0317401041737101 | 451 | 0.0531010897879065 |
| 380 | 0.00534669217426074 | 416 | 0.0324485413802013 | 452 | 0.0550772721456537 |
| 381 | 0.00501356739048205 | 417 | 0.0309068489135391 | 453 | 0.054632286718758 |
| 382 | 0.00431829327943367 | 418 | 0.031333286221512 | 454 | 0.0567028242400458 |
| 383 | 0.00445655690969205 | 419 | 0.0323354585655332 | 455 | 0.0577383208522057 |
| 384 | 0.00607585943141498 | 420 | 0.0329739049771615 | 456 | 0.0587009949298139 |
| 385 | 0.00613235413615659 | 421 | 0.0329879483511409 | 457 | 0.059302450089521 |
| 386 | 0.00610164658689747 | 422 | 0.0321720339939725 | 458 | 0.0626644746286439 |
| 387 | 0.00634775481898555 | 423 | 0.0325895821782523 | 459 | 0.0643725283672667 |
| 388 | 0.0071810854791163 | 424 | 0.0323074899001667 | 460 | 0.064681499744961 |
| 389 | 0.006464598050182 | 425 | 0.0338250128302059 | 461 | 0.0661949025133574 |
| 390 | 0.00709936027779994 | 426 | 0.0343986852048922 | 462 | 0.0670031736630386 |
| 391 | 0.00796623740406267 | 427 | 0.0334903036684146 | 463 | 0.0681454325854694 |
| 392 | 0.00999740712885681 | 428 | 0.0327346731530774 | 464 | 0.0694241050056312 |
| 393 | 0.0114962904642047 | 429 | 0.033519790867553 | 465 | 0.0705050502042713 |
| 394 | 0.0118471020774488 | 430 | 0.0333762638821 | 466 | 0.0702775900194775 |
| 395 | 0.0137571929747874 | 431 | 0.0337880394062729 | 467 | 0.0708746022335549 |
| 396 | 0.0152710831633033 | 432 | 0.0354118221176534 | 468 | 0.0702316368365956 |
| 397 | 0.0179032433781853 | 433 | 0.0353839230632894 | 469 | 0.0713443103752512 |
| 398 | 0.0191479405108003 | 434 | 0.0349782556040727 | 470 | 0.0753459343892438 |
| 399 | 0.0189960560481073 | 435 | 0.0364298051715087 | 471 | 0.0773567908909645 |
| 400 | 0.0195868274524541 | 436 | 0.0388641357977413 | 472 | 0.0770181307481218 |
| 401 | 0.0210340299320575 | 437 | 0.0387127066335765 | 473 | 0.077735320867085 |
| 402 | 0.0210549772842057 | 438 | 0.0380768683290481 | 474 | 0.0792752257236285 |
| 403 | 0.0222283128735016 | 439 | 0.0376586231308303 | 475 | 0.0799194278255757 |
| 404 | 0.0241933973174355 | 440 | 0.0386856772544823 | 476 | 0.0815853716095946 |
| 405 | 0.0257864545848547 | 441 | 0.040491698094392 | 477 | 0.0821163971502058 |
| 406 | 0.0269994011123987 | 442 | 0.0412457495751337 | 478 | 0.0823654249333374 |
| 407 | 0.0271557527099588 | 443 | 0.0415602452113673 | 479 | 0.0837678523444545 |
| 408 | 0.0277871105437838 | 444 | 0.0423916271187304 | 480 | 0.08658115332844 |
| 481 | 0.0889749182866905 | 517 | 0.117588942119795 | 553 | 0.121693308420162 |
| 482 | 0.0908182522277415 | 518 | 0.117337006577433 | 554 | 0.12263038821121 |
| 483 | 0.0924259764167399 | 519 | 0.1179795073402 | 555 | 0.12437281457746 |
| 484 | 0.0937000007556419 | 520 | 0.118423034627875 | 556 | 0.126308399772282 |
| 485 | 0.0956896686646764 | 521 | 0.118155155323913 | 557 | 0.128899748023217 |
| 486 | 0.096961358632181 | 522 | 0.118213452069167 | 558 | 0.131567480723143 |
| 487 | 0.0985264013313182 | 523 | 0.118032772415986 | 559 | 0.133297527201991 |
| 488 | 0.101316330773758 | 524 | 0.117971499889129 | 560 | 0.134787117959311 |
| 489 | 0.103751460399533 | 525 | 0.117600396416343 | 561 | 0.137746472356237 |
| 490 | 0.104816146224136 | 526 | 0.118599085738214 | 562 | 0.141446574694634 |
| 491 | 0.107034298377275 | 527 | 0.119237926986669 | 563 | 0.144018512715292 |
| 492 | 0.110097766653942 | 528 | 0.118593587705003 | 564 | 0.146697574391341 |
| 493 | 0.11112162243976 | 529 | 0.118955469238255 | 565 | 0.150417452563087 |
| 494 | 0.110946210298639 | 530 | 0.119010164110359 | 566 | 0.15401084492227 |
| 495 | 0.11155631259755 | 531 | 0.118307310448086 | 567 | 0.157613111362158 |
| 496 | 0.112825511016254 | 532 | 0.117891638778579 | 568 | 0.161638119484475 |
| 497 | 0.115149139964325 | 533 | 0.117710495280987 | 569 | 0.165460354034357 |
| 498 | 0.116276891350732 | 534 | 0.117946447141536 | 570 | 0.168575527163627 |
| 499 | 0.116740734985402 | 535 | 0.118137823982282 | 571 | 0.17173051002908 |
| 500 | 0.117054394798962 | 536 | 0.11791952845781 | 572 | 0.175393559848025 |
| 501 | 0.118572902192111 | 537 | 0.117850466842454 | 573 | 0.179048714710841 |
| 502 | 0.119767265154079 | 538 | 0.118374064405405 | 574 | 0.183029858043271 |
| 503 | 0.120568542769642 | 539 | 0.117393897726875 | 575 | 0.186399733598238 |
| 504 | 0.120140420969105 | 540 | 0.116566524246813 | 576 | 0.189363791076809 |
| 505 | 0.119833474814485 | 541 | 0.11632445269833 | 577 | 0.192906661709937 |
| 506 | 0.119383647127457 | 542 | 0.115728506022844 | 578 | 0.195802867017946 |
| 507 | 0.119828996617537 | 543 | 0.116498481844874 | 579 | 0.197930846441127 |
| 508 | 0.119041598756335 | 544 | 0.117704292241697 | 580 | 0.200862555260789 |
| 509 | 0.11737703576414 | 545 | 0.117608137268448 | 581 | 0.203950140782895 |
| 510 | 0.117472882899594 | 546 | 0.116767324901569 | 582 | 0.206709637365224 |
| 511 | 0.118533430343042 | 547 | 0.116916860327671 | 583 | 0.208766356520936 |
| 512 | 0.117834633430128 | 548 | 0.117579777304617 | 584 | 0.209931845283249 |
| 513 | 0.117616153136745 | 549 | 0.117881333394233 | 585 | 0.211630989154451 |
| 514 | 0.118550224411941 | 550 | 0.118950809020983 | 586 | 0.213971081805246 |
| 515 | 0.118889264030701 | 551 | 0.119697404695941 | 587 | 0.215471382934192 |
| 516 | 0.118360956345333 | 552 | 0.12087341074175 | 588 | 0.217431386873492 |
| 589 | 0.218699551903148 | 625 | 0.221565494216506 | 661 | 0.225138343746765 |
| 590 | 0.21894317542583 | 626 | 0.221075163277012 | 662 | 0.226563989431439 |
| 591 | 0.22007371997267 | 627 | 0.219534773072314 | 663 | 0.227347317033762 |
| 592 | 0.221083000022652 | 628 | 0.218129886330374 | 664 | 0.227130176698719 |
| 593 | 0.221631658602638 | 629 | 0.217676052996935 | 665 | 0.228525867143676 |
| 594 | 0.221640302724021 | 630 | 0.217649221774562 | 666 | 0.230720935604193 |
| 595 | 0.221843924839139 | 631 | 0.216448569970574 | 667 | 0.232200949284541 |
| 596 | 0.222555552258342 | 632 | 0.215257745078826 | 668 | 0.234574900498826 |
| 597 | 0.22237037628112 | 633 | 0.215093826877563 | 669 | 0.236803250396312 |
| 598 | 0.22290154779485 | 634 | 0.2142735711226 | 670 | 0.237811629958403 |
| 599 | 0.223202471268759 | 635 | 0.213171987388313 | 671 | 0.238585380901188 |
| 600 | 0.222625841274038 | 636 | 0.212709938435733 | 672 | 0.23998538893847 |
| 601 | 0.222845105815634 | 637 | 0.21304336995795 | 673 | 0.242058851160534 |
| 602 | 0.223483835310036 | 638 | 0.213486501952604 | 674 | 0.244100843376342 |
| 603 | 0.223703116950969 | 639 | 0.213150974831312 | 675 | 0.245555772882959 |
| 604 | 0.222986338804453 | 640 | 0.212562460842662 | 676 | 0.247210871036976 |
| 605 | 0.222644683515947 | 641 | 0.212115498672709 | 677 | 0.250029511021169 |
| 606 | 0.22306111686755 | 642 | 0.213076936385821 | 678 | 0.252021629910762 |
| 607 | 0.222947274835409 | 643 | 0.213750904834927 | 679 | 0.254168131637331 |
| 608 | 0.222628589835515 | 644 | 0.213613806835198 | 680 | 0.257191729309931 |
| 609 | 0.222763806049442 | 645 | 0.213824791886034 | 681 | 0.259667247301514 |
| 610 | 0.222463320965961 | 646 | 0.213689102412575 | 682 | 0.262567729085711 |
| 611 | 0.221777408084057 | 647 | 0.213904475663594 | 683 | 0.266002670693649 |
| 612 | 0.221452602419388 | 648 | 0.214410656838266 | 684 | 0.269104378662244 |
| 613 | 0.221729513331028 | 649 | 0.215060002070683 | 685 | 0.272671947787833 |
| 614 | 0.221147675660539 | 650 | 0.21558728001253 | 686 | 0.275691412768344 |
| 615 | 0.222361514835228 | 651 | 0.215719666780657 | 687 | 0.278717881440581 |
| 616 | 0.223420635289907 | 652 | 0.217384274536102 | 688 | 0.282532369574208 |
| 617 | 0.22293507658471 | 653 | 0.219087804387169 | 689 | 0.286091048139297 |
| 618 | 0.222965570935196 | 654 | 0.219331566686224 | 690 | 0.289946739460551 |
| 619 | 0.223291561774409 | 655 | 0.220229221999626 | 691 | 0.293743708492806 |
| 620 | 0.223759174787255 | 656 | 0.221292068170405 | 692 | 0.297192523246211 |
| 621 | 0.224012444158774 | 657 | 0.221914563931926 | 693 | 0.301287086892893 |
| 622 | 0.223817540786472 | 658 | 0.222383976388967 | 694 | 0.30555445260167 |
| 623 | 0.222867624890125 | 659 | 0.223761222579095 | 695 | 0.309823846839966 |
| 624 | 0.221800536875825 | 660 | 0.224617808392119 | 696 | 0.314609151580521 |
| 697 | 0.319633680848073 | 733 | 0.624685815499478 | 769 | 0.825050445362411 |
| 698 | 0.324585774182158 | 734 | 0.632804015200072 | 770 | 0.827454473048256 |
| 699 | 0.330737953523549 | 735 | 0.642520947962519 | 771 | 0.829517281966291 |
| 700 | 0.336784408349919 | 736 | 0.652829170211972 | 772 | 0.830700095789622 |
| 701 | 0.342122975466613 | 737 | 0.661387218379075 | 773 | 0.832023843422206 |
| 702 | 0.347780373301491 | 738 | 0.669071205784489 | 774 | 0.83345127137684 |
| 703 | 0.352920497774722 | 739 | 0.676591510604554 | 775 | 0.838669017591358 |
| 704 | 0.359435041767337 | 740 | 0.685330783179732 | 776 | 0.841611546188685 |
| 705 | 0.365684532505225 | 741 | 0.693617948840501 | 777 | 0.839073939351977 |
| 706 | 0.371940652718104 | 742 | 0.700076239201476 | 778 | 0.841021993725667 |
| 707 | 0.379443119858861 | 743 | 0.706488881208246 | 779 | 0.844380171323903 |
| 708 | 0.386671730864434 | 744 | 0.715252997570221 | 780 | 0.843828579538481 |
| 709 | 0.394413404229278 | 745 | 0.722998542855569 | 781 | 0.84485186661491 |
| 710 | 0.402747173574848 | 746 | 0.727931026756229 | 782 | 0.847440162220869 |
| 711 | 0.410459504584689 | 747 | 0.73392384771524 | 783 | 0.849249613648303 |
| 712 | 0.418418675944649 | 748 | 0.740882720832886 | 784 | 0.850442503656586 |
| 713 | 0.427825986278946 | 749 | 0.747276194510673 | 785 | 0.850579576082876 |
| 714 | 0.436808154872693 | 750 | 0.753481123786684 | 786 | 0.851723491486982 |
| 715 | 0.444971811730215 | 751 | 0.757746158032525 | 787 | 0.854969950128101 |
| 716 | 0.454216050098976 | 752 | 0.761220692392852 | 788 | 0.854998351596697 |
| 717 | 0.464359270145193 | 753 | 0.765540957242529 | 789 | 0.853047823050315 |
| 718 | 0.474178067260445 | 754 | 0.772320244135992 | | |
| 719 | 0.484101882168826 | 755 | 0.777896274115698 | | |
| 720 | 0.493623267138743 | 756 | 0.780477616876877 | | |
| 721 | 0.502845151239673 | 757 | 0.78481365618916 | | |
| 722 | 0.511771625041534 | 758 | 0.788795222137617 | | |
| 723 | 0.521873131665076 | 759 | 0.791932067426329 | | |
| 724 | 0.532875364243896 | 760 | 0.795196261678499 | | |
| 725 | 0.542577209743324 | 761 | 0.798365451050549 | | |
| 726 | 0.552197479803764 | 762 | 0.801506760784642 | | |
| 727 | 0.561913091023183 | 763 | 0.805288253777104 | | |
| 728 | 0.572525465420702 | 764 | 0.808888275393479 | | |
| 729 | 0.584439142860257 | 765 | 0.812687430205518 | | |
| 730 | 0.593809814993504 | 766 | 0.814817631847251 | | |
| 731 | 0.60311308531218 | 767 | 0.816633663183976 | | |
| 732 | 0.614553930866028 | 768 | 0.821135077876341 | | |

From the above-illustrated spectrum it is clear that the blue transmission was limited (Qblue 0.75, when the minimum for driving is 0.6) to favour rising the % of transmission of subsequent wavelengths; moreover, the polarization allows the light transmission to reach the eye gradually (the % rises slowing as the spectrum moves towards higher wavelengths, and reaches about 22% of transmission between 570 and 590 nanometres as shown by the DNA of the lens).

Tests were performed by making the preferred embodiment of eyeglasses 1000 to be worn by 120 patients with healthy eyes and it was found an improvement in the visual capabilities (visual acuity for far and near and contrast sensitivity) in 85% of the subjects.

From an additional analysis which the inventor performed on patients (with or without retinal pathologies) who were subjected to a retina photobiomodulation by using the above-described prototype, it was found that the same highlighted an improvement in the visual capabilities, even by receiving the predetermined wavelengths emitted by a system for emitting artificial light. In the same way, through additional analysis of patients who used specific eyeglasses with polarizing/coloured lenses, confirmed the same improvement.

The eyeglasses 1000 were further subjected to a spectrometric analysis according to three legislations: International, American (American Standard ANSI Z87.1-2003) and Australian-New Zealand (Australian New Zealand Standard AS/NZS 1067:2003). The legislations have slight differences from one another, relating to the illuminant and to the filter acceptability limits. The results of such analyses are shown in Figure 10.

The graph resulting from the spectrometry, as it was found from DNA of the lens and from the course of the spectral transmittance shown in Figure 11, shows a transmission of approximately 22% (filter category 3) with a homogeneous course, without transmission peaks. The light modulated by the prototype 1000 then reaches the eye gradually.

The electromagnetic wave modulating filter according to the present invention can be applied in several fields and situations since it implements an objective improvement of the visual quality, combined to the nourishment of the user's eyes. These effects are not obtained when the light is transmitted through transparent surfaces of known type.

A first example of applying the filter is the one already described of the, even integral, implementation, of ophthalmic lenses for eyeglasses, sun glasses or prescription eyeglasses, to be worn not (only) as solar protection, but as nourishment and stimulation for the visual system.

Moreover, the filter can constitute, or be comprised in: optical systems for any applications, ski googles, visors of helmets, windscreens of vehicles and in general any transparent surface, such as windows, glass walls, verandas, dividers or canopies.

## Claims

1. An optical filter (10) for the selective transmission of electromagnetic waves which make up a light radiation, comprising:
- a first transparent support layer (1), comprising a pigment derived from lutein and
- a second polarizing layer (2),
said optical filter (10) being configured in such a way as to allow the transmission only of the electromagnetic waves which have a wavelength comprised between 520 nm and 590 nm;
wherein said first support layer (1) has a thickness comprised between 0.5 mm and 2 mm and said second polarizing layer (2) has a thickness comprised between 0.1 mm and 0.6 mm and
wherein said first support layer (1) comprises, or consists of, polycarbonate or nylon or polyallyldiglycol-carbonate (PADC) or polyurethane.

2. The optical filter (10) according to claim 1, wherein said pigment has a completely vegetable composition.

3. The optical filter (10) according to claim 1, wherein said pigment has 0.1%-10% vegetable composition and 99.9%-90% acrylic composition.

4. The optical filter (10) according to one of the preceding claims, wherein said second polarizing layer (2) is applied on, or is incorporated within, said first support layer (1).

5. The optical filter (10) according to one of the preceding claims, wherein said second polarizing layer (2) is configured to implement a circular or linear polarization.

6. The optical filter (10) according to the preceding claim, wherein said first support layer (1) is configured in such a way as to allow a transmittance in the blue equal to a maximum of 2%, preferably comprised between 1% and 1.9%.

7. An ophthalmic lens (100) comprising, or consisting of, an optical filter (10) according to one of the preceding claims.

8. Glasses (1000) comprising an ophthalmic lens (100) according to the preceding claim.

## Patentansprüche

1. Optischer Filter (10) zum selektiven Durchlassen von elektromagnetischen Wellen, die eine Lichtstrahlung bilden, umfassend:
- eine erste transparente Trägerschicht (1), die ein von Lutein abgeleitetes Pigment enthält, und
- eine zweite Polarisationsschicht (2),
wobei der optische Filter (10) so ausgelegt ist, dass er nur die elektromagnetischen Wellen durchlässt, deren Wellenlänge zwischen 520 nm und 590 nm liegt;
wobei die erste Trägerschicht (1) eine Dicke zwischen 0,5 mm und 2 mm aufweist und die zweite Polarisationsschicht (2) eine Dicke zwischen 0,1 mm und 0,6 mm aufweist und
wobei die erste Trägerschicht (1) Polycarbonat oder Nylon oder Polyallyldiglykolcarbonat (PADC) oder Polyurethan umfasst oder daraus besteht.

2. Optischer Filter (10) nach Anspruch 1, wobei das Pigment eine vollständig pflanzliche Zusammensetzung aufweist.

3. Optischer Filter (10) nach Anspruch 1, wobei das Pigment 0,1 % bis 10 % pflanzliche Zusammensetzung und 99,9 % bis 90 % Acrylzusammensetzung aufweist.

4. Optischer Filter (10) nach einem der vorhergehenden Ansprüche, wobei die zweite Polarisationsschicht (2) auf die erste Trägerschicht (1) aufgebracht oder in diese eingearbeitet ist.

5. Optischer Filter (10) nach einem der vorhergehenden Ansprüche, wobei die zweite Polarisationsschicht (2) so ausgelegt ist, dass sie eine zirkulare oder lineare Polarisation implementiert.

6. Optischer Filter (10) nach dem vorhergehenden Anspruch, wobei die erste Trägerschicht (1) so ausgelegt ist, dass sie eine Durchlässigkeit im blauen Bereich gleich maximal 2 %, vorzugsweise zwischen 1 % und 1,9 %, ermöglicht.

7. Ophthalmische Linse (100), die einen optischen Filter (10) nach einem der vorhergehenden Ansprüche umfasst oder aus diesem besteht.

8. Brille (1000), umfassend eine ophthalmische Linse (100) nach dem vorhergehenden Anspruch.

## Revendications

1. Filtre optique (10) destiné à la transmission sélective d'ondes électromagnétiques constituant un rayonnement lumineux, comprenant :
- une première couche de support transparente (1), comprenant un pigment dérivé de la lutéine, et
- une seconde couche polarisante (2),
ledit filtre optique (10) étant configuré de manière à ne permettre la transmission que des ondes électromagnétiques dont la longueur d'onde est comprise entre 520 nm et 590 nm ;
dans lequel ladite première couche de support (1) présente une épaisseur comprise entre 0,5 mm et 2 mm et ladite seconde couche polarisante (2) présente une épaisseur comprise entre 0,1 mm et 0,6 mm, et
dans lequel ladite première couche de support (1) comprend, ou est constituée de, polycarbonate, de nylon, de polyallyldiglycolcarbonate (PADC) ou de polyuréthane.

2. Filtre optique (10) selon la revendication 1, dans lequel ledit pigment présente une composition entièrement végétale.

3. Filtre optique (10) selon la revendication 1, dans lequel ledit pigment comprend 0,1 % à 10 % de composition végétale et 99,9 % à 90 % de composition acrylique.

4. Filtre optique (10) selon l'une des revendications précédentes, dans lequel ladite seconde couche polarisante (2) est appliquée sur ladite première couche de support (1) ou est incorporée dans celle-ci.

5. Filtre optique (10) selon l'une des revendications précédentes, dans lequel ladite seconde couche polarisante (2) est configurée pour mettre en œuvre une polarisation circulaire ou linéaire.

6. Filtre optique (10) selon la revendication précédente, dans lequel ladite première couche de support (1) est configurée de manière à permettre une transmittance dans le bleu égale à un maximum de 2 %, de préférence comprise entre 1 % et 1,9 %.

7. Lentille ophtalmique (100) comprenant, ou constituée d'un filtre optique (10) selon l'une des revendications précédentes.

8. Lunettes (1000) comprenant un verre ophtalmique (100) selon la revendication précédente.
